Europäisches Patentamt

European Patent Office

Office européen des brevets

(11) Publication number: **0 588 147 A1**

## EUROPEAN PATENT APPLICATION

(21) Application number: 93113889.5

(22) Date of filing: 31.08.93

(51) Int. Cl.5: **C08J 3/00**, //C08L23/04

(30) Priority: 01.09.92 US 939212

(43) Date of publication of application:
23.03.94 Bulletin 94/12

(84) Designated Contracting States:
BE DE ES FR GB NL

(71) Applicant: PHILLIPS PETROLEUM COMPANY
5th and Keeler
Bartlesville Oklahoma 74004(US)

(72) Inventor: Coutant, William Richard
5840 Meadowcrest
Bartlesville, OK 74006(US)

(74) Representative: Dost, Wolfgang,
Dr.rer.nat.,Dipl.-Chem. et al
Patent- und Rechtsanwälte,
Bardehle . Pagenberg . Dost . Altenburg .
Frohwitter . Geissler & Partner,
Postfach 86 06 20
D-81633 München (DE)

(54) Process for producing polymer blends.

(57) A process is provided for melt blending polymers comprising mixing a high molecular weight polymer and a low molecular weight polymer in two stages. The two stage process extends the range of the molecular weight of polymers which can be employed and the range of the ratio of the compositions that can be effectively blended.

EP 0 588 147 A1

Rank Xerox (UK) Business Services
(3.10/3.09/3.3.4)

## Background of the Invention

The present invention relates to a process of melt blending polymers of different molecular weight.

Polymers commonly produced often have narrow molecular weight distribution and are therefore not ideal for preparing articles by conventional polymer process techniques such as blow molding.

The desired polymer properties and the processability of the polymer are often in conflict. Improvements on the processability frequently result in less desirable polymer properties and vice versa. For example, polymers with high stiffness, high density and more crystalinity, have low environmental stress crack resistance. Polymers with low stiffness, lower density and less crystalinity exhibit high environmental stress crack resistance. Thus, most polymers are a compromise, a balance of performance features.

It is known in the art to blend components with dissimilar characteristics to achieve a blend with superior performance properties. A problem that can occur when blending two or more polymers, especially when they have widely different molecular weights, is inadequate blending. Inadequate blending causes the higher molecular weight component to remain unique, resulting in the development of fisheyes, or gel like particles in the final molded part. Inadequate blending limits the molecular weight range of polymer types that can be blended.

In general there are four factors that affect the blendability of polymers: (1) viscosity ratio of blend components at process temperature and shear rate (2) weight ratio of the polymers blended (3) molecular weight of the high molecular weight component (too high and it will not blend) and (4) specific energy of the mixing process. There is an upper limit on the molecular weight of the high molecular weight component. The weight ratio of the high molecular weight polymer to low molecular weight polymer that can be properly blended is limited.

Mixing can be improved by increasing the specific energy which also increases the heat produced. With large scale continuous extrusion or batch mixing processes, the surface to volume ratio is low causing poor heat transfer capabilities. With this type of equipment any increase in energy input to the polymer by means of shear results in additional polymer temperatures. Since polymers have a point at which process temperatures will cause degradation, there is a limit to the level of mixing energy which large commercial extrusion lines can employ. On a small scale the heat can be dissipated by cooling the blender with water.

It would be desirable to develop a process for blending polymers having widely different molecular weight wherein the blended polymers exhibit desirable processing and performance qualities. It would also be desirable that the process be adaptable to an economical commercial scale process.

## Summary of the Invention

An object of this invention is to provide a process for improving blending of polymers of widely different molecular weights.

In accordance with this invention, a process for melt blending polymers is provided, wherein polymer is combined in two stages. The process comprises melt blending high molecular weight polymer and low molecular weight polymer to form a first polymer blend and then melt blending additional low molecular weight polymer to form a final blend. The process extends the range of the weight ratio of high molecular weight polymer to low molecular weight polymer which can be effectively blended. The process also extends the range of the molecular weights of the polymers that can be employed. The two stage combining process improves blending and the polymer thus produced exhibits both desirable processing properties and excellent polymer properties.

## Detailed Description of the Invention

The present invention is concerned with melt blending polymers, in particular, polymers having widely different molecular weights. The melt blending process involves blending polymer in two stages. A first polymer blend is produced in a first stage. In the first stage, low molecular weight polymer is present in the initial feed in an amount sufficient to produce effective blending of the polymers, as evidenced by a low number of fisheyes in film produced from the final polymer blend. Additional low molecular weight polymer is combined with the first polymer blend in a second stage subsequent to the first stage to produce the final polymer blend. The composition of the final polymer blend is determined by the required polymer processability and film characteristics.

The melt blending can be accomplished by any method known in the art. The melt blending can be carried out in a batch process such as with a Banbury Mixer or in a continuous process such as with a typical pelletizing extruder. A single blender can be used with the additional low molecular weight polymer being combined at an intermediate point in the blending, or a plurality of blenders can be used in series. Extruder blending is preferred. Single or twin screw extruders can be utilized. The polymers can be dry blended prior to the melt blending.

The blending conditions depend upon the blending technique and polymer employed. If an initial dry blending of the polymer is employed, the blending conditions may include temperatures from room temperature up to just under the melting temperature of the polymer, and blending times in the range of a few seconds to hours, e.g. 2 seconds to 30 minutes.

During the melt blending, the temperature at which the polymers are combined in the blender will generally be in the range between the highest melting point of the polymers employed and up to about 200°C above such melting point, preferably between such melting point and up to 160°C above such melting point.

The time required for the melt blending can vary broadly and depends on the method of blending employed. The time required is the time sufficient to thoroughly mix the components. Generally, the individual polymers are blended for a time of about 10 seconds to about 15 minutes.

The high molecular weight and low molecular weight polymers employed in the first step can be of the same type or different. The low molecular weight polymer of the second step can be the same or different from that employed in the first step. Polymers suitable for use with the invention are thermoplastic polymers and include homopolymers, copolymers, and terpolymers of aliphatic 1-olefins, conjugated diolefins, acrylates, acrylonitrile, vinyl acetate, vinyl alcohols, vinyl halides, amides, esters, vinylaromatic compounds, and aromatic sulfides having from 2 to 18 carbon atoms per molecule, preferably from 2 to 10 carbon atoms, and mixtures thereof. Examples of some suitable polymers include polyethylene, polypropylene, polymethylpentene, polybutadiene, poly(arylene sulfides) such as poly(phenylene sulfide) and poly-(phenylene sulfide sulfone), polyvinylchloride, polyethylene terephthalate, polystyrene, polycarbanic acid, nylon-6, nylon-6,6, polycarbonates, and polyvinylidene fluoride. Olefin polymers are preferred and polyethylene is most preferred.

Although the present invention is suitable for blending polymers having a broad range of molecular weights, it is especially effective for blending high molecular weight polymers and low molecular weight polymers having widely different molecular weights.

By widely different is meant, the viscosity of the high molecular weight polymer is greater than about 50,000 poise at a shear rate of 100 reciprocal seconds at the melt blending process temperature and the viscosity of the low molecular weight polymer is less than 3,000 poise at a shear rate of 100 reciprocal seconds at the melt blending process temperature. The present invention is especially useful when the viscosity of the high molecular weight polymer is in the range of 75,000 poise to 150,000 poise at a shear rate of 100 reciprocal seconds at the melt blending process temperature and the viscosity of the low molecular weight polymer is in the range of 50 poise to 2,000 poise at a shear rate of 100 reciprocal seconds at the melt blending process temperature.

The polymers employed in the present invention can be produced by any means known in the art. For example ethylene polymers having a narrow molecular weight distribution can be produced with high productivity catalysts known in the art, such as for example titanium, zirconium and/or vanadium-containing catalyst systems. Titanium/magnesium catalysts used in conjunction with organoaluminum cocatalysts are preferred. Such catalysts as well as polymerization processes to make such polymers are described in more detail but not limited to, those disclosed in patents U.S. 4,326,988; U.S. 4,394,291; and U.S. 4,562,168 which are herein incorporated by reference.

Ethylene polymers exhibiting broad molecular weight distribution characteristics can be prepared, for example, by chromium catalyst systems. Typically the chromium catalyst systems comprise chromium, at least a portion of which is in the hexavalent state, supported on an inorganic oxide, and optionally a metal alkyl cocatalyst. Exemplary chromium catalyst systems include, but are not limited to those disclosed in U.S. Patents 3,887,494, 3,900,457; 4,053,436; 4,151,122; 4,294,724; 4,392,990; and 4,405,501, herein incorporated by reference.

Polypropylene can be employed with the invention and can be prepared by any process known in the art, such as for example as disclosed in U.S. patents 4,376,851 and 3,970,719 which are herein incorporated by reference.

Polymethylpentene can be employed with the invention and can be prepared by any process known in the art, such as for example as disclosed in U.S. patents 4,343,851 and 4,477,588 which are herein incorporated by reference.

Copolymers such as styrene/butadiene block copolymers can be employed in the invention and can be prepared by any process known in the art, such as for example as disclosed in U.S. patents 4,091,053 and 4,584,346.

EP 0 588 147 A1

Poly(arylene sulfides) useful in the invention can be prepared by any process known in the art. Typical processes are described in U.S. Patents 3,919,177; 4,451,643; 4,102,875; and 5,064,936, the disclosure of which is herein incorporated by reference.

For example, suitable ethylene polymers which can benefit by the blending process of the present invention can be characterized by the following parameters. The high load melt index of the high molecular weight ethylene polymer is generally less than about 5 g/10 min., preferably from 0.01 g/10 min. to 4.0 g/10 min at 190°C, ASTM D 1238-65T, condition F. The melt index of the low molecular weight ethylene polymer is generally greater than about 5 g/10 min., preferably from 45 g/10 min. to 1000 g/10 min. at 190°C, ASTM D 1238-65T, conditions E.

In the first stage, of the present invention, low molecular weight polymer is present in the initial feed in an amount sufficient to produce effective blending of the polymers and reduce fisheye numbers in film produced from the final polymer blend. Generally, to produce adequate mixing, the low molecular weight polymer is present in the initial feed in an amount less than about 50 weight percent. Generally, the amount of low molecular weight polymer present in the first polymer blend is from about 10 to about 50 weight percent of the total first polymer blend, preferably from 15 to 45 weight percent. When lower levels of low molecular weight polymer are used, the polymer melt of the first polymer blend becomes too viscous to blend with the low molecular weight polymer in the second stage.

Low molecular weight polymer is combined at the second stage in an amount such that the desired composition is produced which is determined by the required processing and performance characteristics. Generally the amount of low molecular weight polymer in the final polymer blend is from about 20 to about 60 weight percent of the total final polymer blend, preferably from 30 to 55 weight percent of the total final polymer blend.

In another embodiment, a third component comprising an intermediate molecular weight polymer can be combined as a compatibilizer to further improve blending efficiency. The intermediate molecular weight polymer can be of the same type or different from the high and low molecular weight polymer. The intermediate molecular weight polymer can be prepared by any means known in the art as those described above for the high and low molecular weight polymers.

The viscosity of the intermediate molecular weight polymer can vary over a broad range, generally it is in the range of from about 15,000 poise to about 95,000 poise, preferably from 20,000 poise to 85,000 poise at a shear rate of 100 reciprocal seconds at the melt blending process temperature.

The intermediate polymer can be combined in the first stage and/or in the second stage, preferably it is combined in the first stage.

When ethylene polymers are employed as the intermediate polymer, for example, the high load melt index is in the range of from about 0.30 to about 30 g/10 min., preferably from 0.50 to 20 g/10 min. at 190°C, ASTM D 1238-65T, condition F

When an intermediate polymer is employed, the amount of intermediate polymer present in the final polymer blend can vary over a broad range depending on the desired properties of the final polymer blend. Generally the amount of intermediate polymer is from about 5 to about 70 weight percent of the total final polymer blend, preferably from 10 to 60 weight percent.

In a preferred embodiment, polymer additives such as antioxidants, UV stabilizers, fillers, pigments etc. can be included.

The polymer blends prepared according to the invention are useful for the production of polyolefin film, particularly by known tubing techniques, for blow-molding (e.g. to produce bottles), for pipe production, wire coating, injection molding, and rotational molding.

The following examples will serve to show the present invention in detail by way of illustration and not by way of limitation.

Examples

Example I demonstrates that melt blending of high molecular weight polymer and low molecular weight polymer can be improved by adding the low molecular weight polymer in two stages.

Example II demonstrates the improvement attained by introducing an intermediate molecular weight polymer in the first stage of the inventive process.

Ethylene polymers were blended in varying amounts. The polymers blended were high molecular weight, intermediate molecular weight, and low molecular weight polymers as further specified in the following examples. Films were prepared from the blended product and were tested for blending efficiency, as determined by fisheye count.

4

For stabilization during the processing each of the following additives was admixed with the polymers in the amount of 0.04-0.07 weight % based on the total weight of the initial feed:
(tetrakis[methylene(3,5-di-t-butyl-4-hydroxyhydrocinnamate)]methane, Irganox 1010® commercially available frm Ciba-Geigy; and
2,4-bis(1,1-dimethylethyl)phenyl-phosphite, Irgafos 168® available from Ciba-Geigy; or
bis(2,4-di-t-butylphenyl)pentaerythritol diphosphite/0.5-1.2 percent triisopropanolamine, Ultranox 626® commercially available from GE; and
Calcium stearate or zinc stearate.

The polymers and additives in the initial feed were mixed in a fiber drum for 20 minutes and then melt blended in a Werner & Pfleiderer ZSK-40 extruder. Low molecular weight polymer was introduced through a vent downstream after the initial feed material was melted and mixed to form the first polymer blend. The extruder temperature was in a range of 210°C to 270°C.

The ethylene polymer blend was converted to a blown film using a 38 mm Davis-Standard extruder of 24-1 length/diameter ratio screw. The film die was 10.2 cm in diameter with a 0.56 mm die gap. An air ring was used to cool and support the ethylene polymer bubble in a film tower. The extrusion temperature was in the range of 250 $\pm$ 20°C. The film produced generally had a thickness of 1 mil. The blow/up ratio was 4:1 and the liner drawdown ratio was 5.5:1.

Fisheye count or gel count was made on two sections of film one mil thick and one square foot in area. Only fisheyes greater than ten mils in at least one dimension were counted. In the case of film with fisheye count greater than 50 per square foot, a five square inch section of film was counted.

Example I

In the first example a series of polyethylene blends was prepared varying the composition of the initial feed. The composition of the final blended product was the same for all runs. Adding low molecular weight polymer in two stages produced better blending of the polymers. Blended ethylene polymers provided a product suitable for preparing films and thereby providing an accurate, quantitative means of evaluating the blending efficiency, i.e. fisheye count.

Run 101 was a single stage blending process. In runs 102 and 103, high molecular weight polymer and low molecular weight polymer were mixed in a first stage to produce a first polymer blend and additional low molecular weight polymer was combined in a second stage subsequent to the first stage.

Characteristics of blend component A include HLMI of 0.28 g/10 min. at 190°C, a viscosity of 100,000 poise at 190°C at a shear rate of 100 reciprocal seconds, and 0.9398 g/cc density. Blend component C exhibited MI of 82 g/10 min. at 190°C, a viscosity of 1200 poise at 190°C at a shear rate of 100 reciprocal seconds, and 0.9722 g/cc density. Component C was combined in the final feed of Runs 102 and 103 to give a final composition of 50 weight percent A and 50 weight percent C. All samples were blended in a W & P ZSK-40 extruder. The melt discharge temperature was 250°C to 270°C.

As used above and in the tables below, various polymer properties are defined below.

Melt index, (MI), g/10 min. at 190°C, was determined according to ASTM D 1238-65T, conditions E.

High load melt index (HLMI), g/10 min. at 190°C, was determined according to ASTM D 1238-65T, conditions F.

Density as g/cc, was determined according to ASTM D 1505-68.

Table 1

|  | Run 101 | Run 102 | Run 103 |
|---|---|---|---|
| A/C in initial feed | 50/50 | 65/35 | 75/25 |
| A/C in final product | 50/50 | 50/50 | 50/50 |
| Film Properties Fisheye level (Count/sq. ft.) | 317 | 78 | 20 |

The results in Table 1 demonstrate improved blending in Runs 102 and 103 compared to Run 101, as evidenced by the reduction of the number of fisheyes in the film prepared. In Run 101, the low molecular weight polymer was mixed in the initial feed only, a single stage blending. In Runs 102 and 103, low molecular weight polymer was combined in two stages, reducing the fisheye level by a factor of 4 to as much as 15.

Example II

A series of blends was prepared to determine the impact of intermediate molecular weight polymer on blending effectiveness. Varying amounts of high, low, and intermediate molecular weight polymer were combined. In all runs, the initial feed contained 30 weight percent low molecular weight ethylene polymer. In Run 201, an initial feed of 70 weight percent high molecular weight ethylene polymer was employed. In Runs 202 and 203, an intermediate molecular weight ethylene polymer was combined in the initial feed. The final product composition was achieved by introducing varying amounts of low molecular weight ethylene polymer through a vent of the extruder downstream from the first polymer blend, after the initial feed was melted and mixed to form the first polymer blend.

Table 2 describes the characteristics of the individual components and the characteristics and composition of the final polymer product. Terms used in Table 2 are defined below.

High represents high molecular weight polymer as defined in the table.

Intermediate represents intermediate molecular weight polymer.

Low represents low molecular weight polymer.

Final Product is final polymer blend.

MI is melt index in g/10 min. and HLMI is high load melt index in g/10 min. as defined above.

Viscosity represents the viscosity of the ethylene polymer in poise at 190°C at a shear rate of 100 reciprocal seconds.

Final (Wt. %) represents the weight percent of each component in the total final blend.

## Table 2

| Composition | MI | HLMI | Viscosity | Wt. % | Fisheye (count/ sq. ft.) |
|---|---|---|---|---|---|
| Run 201 | | | | | |
| High | | 0.25 | 100,000 | 55 | |
| Intermediate | | | | 0 | |
| Low | 378 | | 100* | 45 | |
| Final Product | 0.04 | 6.7 | | | 22 |
| | | | | | |
| Run 202 | | | | | |
| High | | 0.25 | 100,000 | 42 | |
| Intermediate | | 1.13 | 50,000 | 14 | |
| Low | 378 | | 100* | 44 | |
| Final Product | 0.06 | 6.2 | | | 8 |
| | | | | | |
| Run 203 | | | | | |
| High | | 0.25 | 100,000 | 45.8 | |
| Intermediate | | 5.5 | 23,000 | 14 | |
| Low | 378 | | 100* | 40.2 | |
| Final Product | 0.05 | 5.8 | | | 10 |

*estimated

Table 2 demonstrates that blending quality using a two stage blending process is further improved when an intermediate range polymer is combined in the initial feed, as indicated by the reduced fisheye count in runs 202 and 203 compared to run 201. The number of fisheyes was reduced 55 to 64 percent.

While this invention has been described in detail for the purpose of illustration, it is not to be construed as limited thereby, but is intended to cover all changes and modification within the spirit and scope thereof.

**Claims**

1. A process for producing a polymer blend by melt blending high molecular weight polymer and low molecular weight polymer, said high molecular weight polymer having a viscosity of greater than about 5000 Pas and said low molecular weight polymer having a viscosity of less than about 300 Pas, each measured at a shear rate of 100 reciprocal seconds at a predetermined melt blending temperature, said process comprising:

(1) melt blending low molecular weight polymer and high molecular weight polymer in a first stage to form a first polymer blend, and

(2) melt blending additional low molecular weight polymer with said first polymer blend in a second stage to form a final polymer blend.

2. The process of claim 1 wherein said viscosity of said high molecular weight polymer is in the range of 7500 to 15000 Pas and said viscosity of said low molecular weight polymer is in the range of 5 to 200 Pas, each at a shear rate of 100 reciprocal seconds at the melt blending temperature.

3. The process of claim 1 or 2 wherein said low molecular weight polymer is present in said first stage in an amount less than about 50 %, preferably 10 to 50 % and more preferably 15 to 45 %, each weight percent of the total first polymer blend, and said low molecular weight polymer is present in said final polymer blend in an amount from 20 to 60 %, preferably 30 to 55 %, each weight percent of the total final polymer blend.

4. The process of any of the preceding claims wherein said melt blending is carried out at a temperature in the range of from the highest melting point of the polymers employed and up to about 200 °C, preferably up to about 160 °C, above said highest melting point of the polymers.

5. The process of any of the preceding claims further comprising adding an intermediate molecular weight polymer having a viscosity of from 1500 to 9500 Pas, preferably from 2000 to 8500 Pas, each at a shear rate of 100 reciprocal seconds at the melt blending process temperature.

6. The process of claim 5 wherein said intermediate molecular weight polymer is present in an amount from 5 to 70 weight percent of the total final polymer blend.

7. The process of claim 6 wherein said intermediate molecular weight polymer is added in said first stage.

8. The process of any of the preceding claims wherein each of said polymers is a polyolefin, preferably an ethylene polymer.

9. The process of claim 8 wherein the high load melt index of the high molecular weight ethylene polymer is less than about 5 g/10 min., preferably from 0.01 to 4.0 g/10 min., each measured at 190 °C, ASTM D 1238-65T, condition F; and the melt index of the low molecular weight ethylene polymer is greater than about 5 g/10 min., preferably from 45 to 1000 g/10 min., each measured at 190 °C, ASTM D 1238-65T, conditions E.

10. The process of any of claims 5 to 7 wherein said intermediate molecular weight polymer is an ethylene polymer having a high load melt index of from 0.30 to 30 g/10 min., preferably from 0.50 to 20 g/10 min., each at 190 °C, ASTM D 1238-65T, condition F.

11. The process of any of the preceding claims wherein said melt blending is extruder blending.

European Patent Office

**EUROPEAN SEARCH REPORT**

Application Number

EP 93 11 3889

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-A-25 51 352 (BASF AG.)<br>* claim *<br>* example 1 *<br>* page 9, line 9 - line 12 *<br>--- | 1,8,11 | C08J3/00<br>//C08L23:04 |
| X | US-A-4 230 831 (SAKURAI H. ET AL)<br>* claims 1,5 *<br>* column 3, line 62 - line 66 *<br>* column 4, line 25 - line 34 *<br>* column 5, line 10 - line 17 *<br>* examples *<br>----- | 1,3,4,11 | |
| | | | TECHNICAL FIELDS SEARCHED (Int.Cl.5)<br><br>C08J<br>C08L |

The present search report has heen drawn up for all claims

| Place of search | Date of completion of the search | Examiner |
|---|---|---|
| THE HAGUE | 28 December 1993 | Niaounakis, M |